# EUROPÄISCHE PATENTANMELDUNG

(11) **EP 3 560 753 A1**
(43) Veröffentlichungstag der Anmeldung: **30.10.2019**
(21) Anmeldenummer: 19162416.2
(22) Anmeldetag: 13.03.2019
(51) Int. Cl.: B60N 2/015, B60N 2/14

(54) **ADAPTERELEMENT FÜR EINE DREHVORRICHTUNG**

(30) Priorität: 24.04.2018 DE 102018109850
(71) Anmelder: Aguti Produktentwicklung & Design GmbH, 88085 Langenargen (DE)
(72) Erfinder: Rogg, Christian, 88142 Wasserburg (DE)
(74) Vertreter: Otten, Roth, Dobler & Partner mbB Patentanwälte

(57) **Zusammenfassung**

Adapterelement für eine Drehvorrichtung, wobei die Drehvorrichtung dazu vorgesehen ist, einen Fahrzeugsitz mit einem Fahrzeug drehbeweglich zu verbinden, wobei das Adapterelement dazu ausgebildet ist, zwischen einer Dreheinheit der Drehvorrichtung und dem Fahrzeugsitz oder zwischen der Dreheinheit der Drehvorrichtung und dem Fahrzeug angeordnet zu werden, wobei das Adapterelement Montagemittel aufweist, wobei die Montagemittel zur Anbringung des Adapterelements an Befestigungsmittel des Fahrzeugsitzes und/oder an Befestigungsmittel des Fahrzeugs ausgebildet sind, wobei die Befestigungsmittel in einem definierten Befestigungsschema am Fahrzeugsitz oder am Fahrzeug vorhanden sind. Das Adapterelement kennzeichnet sich dadurch, dass die Montagemittel derart ausgebildet sind, dass das Adapterelement an zwei verschiedene Befestigungsschemas eines oder mehrerer Fahrzeugsitze und/oder an zwei verschiedene Befestigungsschemas eines oder mehrerer Fahrzeuge anbringbar ist.

## Beschreibung

### Stand der Technik

Drehvorrichtungen für einen Fahrzeugsitz, um den Fahrzeugsitz um eine Achse senkrecht zu einem Fahrzeugboden drehbar auszubilden sind bekannt. Bekannte Drehvorrichtungen umfassen eine Dreheinheit, einen Überbau und einen Unterbau, wobei die Dreheinheit zwischen dem Überbau und dem Unterbau angeordnet ist. Der Überbau und der Unterbau umfasst jeweils Montageelemente, um die Drehvorrichtung zum einen an das Fahrzeug, z.B. an einen Fahrzeugboden zu montieren und zum anderen an den Fahrzeugsitz, sodass die Drehvorrichtung zwischen dem Fahrzeug und dem Fahrzeugsitz vorhanden ist.

Dabei umfassen bekannte Fahrzeuge und Fahrzeugsitze jeweils ein Befestigungsschema, welches zum einen komplementär am Fahrzeugsitz und am Fahrzeug und zum anderen an bekannten Drehvorrichtungen komplementär am Überbau und am Unterbau entsprechend vorhanden ist. Nachteilig daran ist, dass die bekannten Drehvorrichtungen dadurch nur an einem speziellen Befestigungsschema anbringbar sind, z.B. nur an einem speziellen Typ eines Herstellers. Sobald ein weiteres Fahrzeug oder ein weiterer Fahrzeugsitz, z.B. eines anderen Herstellers, ein anderes Befestigungsschema aufweist, ist die Drehvorrichtung nicht daran montierbar bzw. muss darauf angepasst werden.

### Aufgabe und Vorteile der Erfindung

Der Erfindung liegt die Aufgabe zugrunde, ein Adapterelement bereitzustellen, mittels welchem eine Drehvorrichtung an verschiedenen Befestigungsschemas eines oder mehrerer Fahrzeugsitze und/oder eines oder mehrerer Fahrzeuge anbringbar ist und/oder eine verbesserte Drehvorrichtung bereitzustellen, welche an Befestigungsschemas eines oder mehrerer Fahrzeuge anbringbar ist.

Diese Aufgabe wird durch die Merkmale der vorliegenden Ansprüche 1 und 8 gelöst.

In den abhängigen Ansprüchen sind vorteilhafte und zweckmäßige Ausführungen der Erfindung angegeben.

Die Erfindung geht von einem Adapterelement für eine Drehvorrichtung aus, wobei die Drehvorrichtung dazu vorgesehen ist, einen Fahrzeugsitz mit einem Fahrzeug drehbeweglich zu verbinden, wobei das Adapterelement dazu ausgebildet ist, zwischen einer Dreheinheit der Drehvorrichtung und dem Fahrzeugsitz oder zwischen der Dreheinheit der Drehvorrichtung und dem Fahrzeug angeordnet zu werden, wobei das Adapterelement Montagemittel aufweist, wobei die Montagemittel zur Anbringung des Adapterelements an Befestigungsmittel des Fahrzeugsitzes und/oder an Befestigungsmittel des Fahrzeugs ausgebildet sind, wobei die Befestigungsmittel in einem definierten Befestigungsschema am Fahrzeugsitz oder am Fahrzeug vorhanden sind.

Die Befestigungsmittel sind in einem insbesondere unveränderlichen Befestigungsschema am Fahrzeugsitz oder am Fahrzeug vorhanden.

Als ein Befestigungsschema ist z.B. ein Bohrbild oder ein Lochbild anzusehen. Befestigungsmittel eines Befestigungsschemas sind z.B. auf einem vorgegebenen Lochkreis als Bohrungen verteilt ausgebildet. Ein Befestigungsschema umfasst vorteilhafterweise mehrere Befestigungsmittel, beispielsweise mindestens zwei, insbesondere mindestens oder genau drei Befestigungsmittel, z.B. mindestens oder insbesondere genau vier Befestigungsmittel. Ein Befestigungsmittel ist z.B. als eine Bohrung, als ein Stift, z.B. als ein Gewindestift und/oder als ein Bolzen ausgebildet. Ein Befestigungsschema umfasst vorteilhafterweise voneinander beabstandete Befestigungsmittel. Beispielsweise sind alle Befestigungsmittel eines Befestigungsschemas voneinander beabstandet vorhanden. Beispielsweise sind alle Befestigungsmittel eines Befestigungsschemas gleich ausgebildet, z.B. sind die Bohrungen, die Stifte oder die Bolzen identisch vorhanden.

Vorteilhafterweise sind die Montagemittel derart ausgebildet, dass das Adapterelement, insbesondere direkt oder unmittelbar, beispielsweise ohne eine weitere Adaptervorrichtung, an zwei, drei, vier, fünf, sechs, sieben, acht, neun, zehn, elf, zwölf oder mehr insbesondere voneinander verschiedene Befestigungsschemas eines oder mehrere Fahrzeugsitze und/oder eines oder mehrerer Fahrzeuge anordenbar ist.

Kern der Erfindung ist es, dass die Montagemittel derart ausgebildet sind, dass das Adapterelement an zwei verschiedene Befestigungsschemas eines oder mehrerer, insbesondere verschiedener Fahrzeugsitze und/oder an zwei verschiedene Befestigungsschemas eines oder mehrerer, insbesondere verschiedener Fahrzeuge anbringbar ist. Hierdurch ist eine Drehvorrichtung einzig durch das Adapterelement vergleichsweise einfach und insbesondere variabel an verschiedene Befestigungsschemas anbringbar, sodass eine vergleichsweise aufwendige und kostspielige Anpassung der Drehvorrichtung nicht notwendig ist.

Beispielsweise ist das Adapterelement dazu ausgebildet, zwischen einem Überbau der Drehvorrichtung und dem Fahrzeugsitz oder einem Unterbau der Drehvorrichtung und dem Fahrzeug angeordnet zu werden. Zum Beispiel umfasst das Adapterelement Anbringmittel, wobei die Anbringmittel zur Anbringung des Adapterelements an die Dreheinheit der Drehvorrichtung, an den Überbau der Drehvorrichtung und/oder an den Unterbau der Drehvorrichtung ausgebildet sind.

Bevorzugterweise sind die Montagemittel derart ausgebildet, dass das Adapterelement an insbesondere zwei verschiedenen Befestigungsschemas insbesondere zweier verschiedener Fahrzeugsitze und/oder an insbesondere zwei verschiedenen Befestigungsschemas insbesondere zweier verschiedener Fahrzeuge anbringbar ist.

Auch ist es von Vorteil, dass die Montagemittel spiegelsymmetrisch, insbesondere achsensymmetrisch ausgebildet sind. Bevorzugterweise sind die Montagemittel spiegelsymmetrisch, insbesondere achsensymmetrisch am Adapterelement angeordnet. Vorteilhafterweise sind die Montagemittel spiegelsymmetrisch zu einer Spiegelebene vorhanden, welche quer, insbesondere senkrecht zu einer Hauptebene des Adapterelements verläuft bzw. steht. Vorteilhafterweise ist das Adapterelement mit der Hauptebene insbesondere anliegend am Fahrzeugsitz und/oder am Fahrzeug anordenbar. Vorteilhafterweise verläuft eine Spiegelebene und/oder eine Spiegelachse der Montagemittel des Adapterelements im angeordneten Zustand des Adapterelements in Fahrtrichtung des Fahrzeugs und/oder in Sitzrichtung des Fahrzeugsitzes. Beispielsweise sind die Montagemittel zu einer einzigen Spiegelebene spiegelsymmetrisch ausgebildet.

Weiter wird vorgeschlagen, dass die Montagemittel als Montageöffnungen vorhanden sind. Vorteilhafterweise sind insbesondere alle Montagemittel als Montageöffnungen ausgebildet. Die Montageöffnungen sind beispielsweise als das Adapterelement insbesondere vollständig durchdringende Montagelöcher vorhanden. Die Montageöffnungen sind zum Beispiel als durchgehende Montagelöcher am Adapterelement ausgebildet. Bevorzugterweise sind die Montageöffnungen spiegelsymmetrisch, insbesondere achsensymmetrisch am Adapterelement angeordnet. Beispielsweise ist eine Montageöffnung als eine Bohrung, insbesondere als eine Durchgangsbohrung am Adapterelement vorhanden.

Außerdem erweist es sich von Vorteil, dass das Adapterelement in der Form einer Adapterplatte ausgebildet ist, wobei die Montageöffnungen an, z.B. drei, insbesondere vier separaten Bereichen der Adapterplatte ausgebildet sind, wobei die Montageöffnungen an einem ersten und an einem zweiten Bereich der separaten Bereiche insbesondere ausschließlich als Langlöcher ausgebildet sind. Die Bereiche des Adapterelements sind vorteilhafterweise beabstandet zueinander ausgebildet.

Beispielsweise umfasst das Adapterelement drei, insbesondere vier voneinander separate Bereiche, an welchen die Montageöffnungen vorhanden sind. Bevorzugterweise liegen sich jeweils zwei der bspw. vier Bereiche zu einer Mitte des Adapterelements, z.B. zu einer Mittenachse und/oder einer Mittenebene des Adapterelements, insbesondere zu einer Mitte der Adapterplatte gesehen gegenüber. Beispielsweise ist die Adapterplatte rechteckförmig vorhanden und die Bereiche sind in Eckbereichen der Adapterplatte ausgebildet. Beispielsweise ist das Adapterelement als eine Platte vorhanden, bspw. als eine Metallplatte, insbesondere als eine Stahlplatte.

Vorteilhafterweise sind an zwei, der insbesondere mehr als zwei Bereiche die Montageöffnungen, insbesondere alle Montageöffnungen, als Langlöcher ausgebildet. Beispielsweise sind ein, zwei, vier oder mehr, insbesondere drei Montageöffnungen an einem Bereich vorhanden und jeweils als ein Langloch ausgebildet.

Von Vorteil erweist sich ebenfalls, dass ein Langloch des ersten Bereichs und ein Langloch des zweiten Bereichs in Längserstreckung des jeweiligen Langlochs gesehen sich in eine gleiche Richtung erstrecken. Ein Langloch des ersten Bereichs und ein Langloch des zweiten Bereichs erstrecken sich in Längserstreckung des jeweiligen Langlochs gesehen vorteilhafterweise parallel zueinander. Die Längserstreckung des Langlochs ist insbesondere quer, beispielsweise in einer Querrichtung, zu einer Bohrungsrichtung der Langlöcher zu sehen. Die Bohrungsrichtung der Langlöcher ist vorteilhafterweise eine Erstreckungsrichtung der Langlöcher durch das Adapterelement von einer Hauptebene des Adapterelements zu einer zweiten davon beabstandeten gegenüberliegenden Hauptebene des Adapterelements.

Außerdem wird vorgeschlagen, dass ein dritter und ein vierter Bereich vorhanden ist und der dritte und der vierte Bereich eine Montageöffnung in Form eines Langlochs und eine Montageöffnung in Form einer Bohrung umfasst. Die Bohrung ist vorteilhafterweise zylinderförmig, insbesondere zylindrisch ausgebildet. Der dritte und der vierte Bereich umfassen insbesondere jeweils eine einzige Montageöffnung in Form eines Langlochs. Bevorzugterweise umfassen der dritte und der vierte Bereich eine Montageöffnung, welche eine mäandernde Kontur bspw. eine mäanderartige Kontur, bspw. eine Freiformkontur aufweist. Vorteilhafterweise ist die mäandernde Kontur der Montageöffnung aus einer Draufsicht auf eine Hauptebene des Adapterelements zu sehen.

Weiter erweist es sich als vorteilhaft, dass der erste und der zweite Bereich im montierten Zustand am Fahrzeug und/oder im montierten Zustand am Fahrzeugsitz in Fahrtrichtung des Fahrzeugs gesehen hinten ausgebildet sind. Vorteilhafterweise ist der dritte und der vierte Bereich im montierten Zustand am Fahrzeug und/oder am Fahrzeugsitz in Fahrtrichtung des Fahrzeugs gesehen vorne ausgebildet. Eine Längserstreckung eines Langlochs der Montagemittel ist im angeordneten Zustand des Adapterelements am Fahrzeug und/oder am Fahrzeugsitz bevorzugterweise quer zu einer Fahrtrichtung des Fahrzeugs angeordnet.

Eine vorteilhafte Ausführung der Erfindung ist eine Drehvorrichtung für einen Fahrzeugsitz, wobei die Drehvorrichtung dazu ausgebildet ist, einen Fahrzeugsitz mit einem Fahrzeug drehbeweglich zu verbinden, wobei das Adapterelement den Überbau der Drehvorrichtung und/oder dass das Adapterelement den Unterbau der Drehvorrichtung bildet. Hierdurch ist bereits die Drehvorrichtung selbst für eine Anbringung an verschiedene Befestigungsschematas vorbereitet. Der Überbau und/oder der Unterbau sind vorteilhafterweise einstückig mit dem Adapterelement ausgebildet.

Ebenfalls erweist es sich von Vorteil, dass der Überbau und der Unterbau der Drehvorrichtung identisch ausgebildet sind. Beispielsweise sind der Oberbau und der Unterbau zueinander spiegelsymmetrisch ausgebildet. Vorteilhafterweise sind der Überbau und der Unterbau identisch ausgebildet und zueinander spiegelsymmetrisch, insbesondere achsensymmetrisch an der Drehvorrichtung angeordnet. Vorteilhafterweise ist der Überbau und/oder der Unterbau als ein Stanzteil ausgebildet. Beispielsweise ist der Überbau und/oder der Unterbau aus Metall, insbesondere aus Stahl und/oder Eisen ausgebildet.

Als vorteilhafte Ausbildungen der Erfindung werden weiter ein Fahrzeugsitz mit einem Adapterelement und/oder einer Drehvorrichtung nach einer der vorangegangenen Ausführungen vorgeschlagen, oder ein Fahrzeug mit einem Adapterelement und/oder einer Drehvorrichtung nach einer vorangegangenen Ausführungen.

### Beschreibung von Ausführungsbeispielen

Verschiedene Ausführungsbeispiele werden anhand der nachstehenden schematischen Zeichnungen unter Angabe weiterer Einzelheiten und Vorteile näher erläutert.

Es zeigen:
- Figur 1: ein erfindungsgemäßes Adapterelement in einer Draufsicht,
- Figur 2: in einer perspektivischen Ansicht von seitlich hinten oben eine Drehvorrichtung mit einem Adapterelement,
- Figur 3: die Drehvorrichtung aus Figur 2 in einer Draufsicht,
- Figur 4: die Drehvorrichtung aus Figur 2 in einer Ansicht von vorne und
- Figur 5: die Drehvorrichtung aus Figur 2 in einer seitlichen Ansicht.

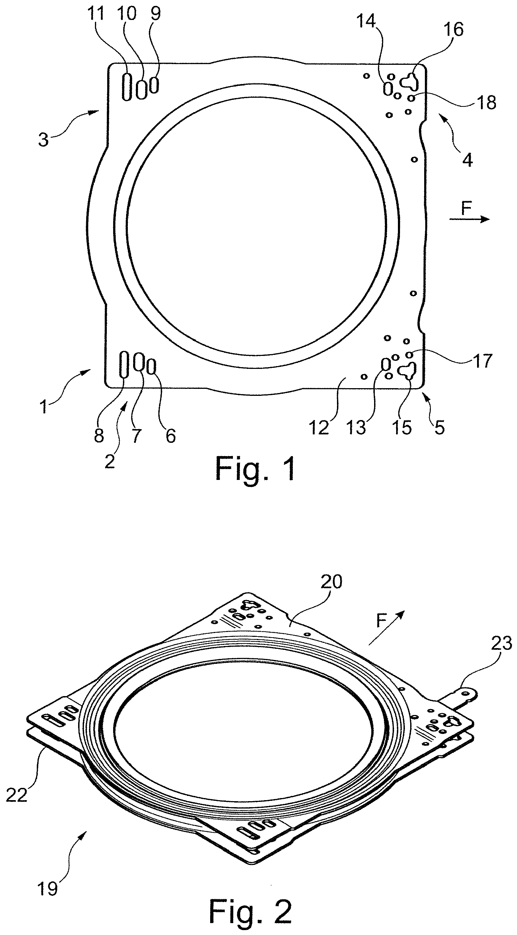

Figur 1 zeigt ein erfindungsgemäßes Adapterelement in Form einer Adapterplatte 1. Die Adapterplatte 1 ist plattenförmig ausgebildet und insbesondere rechteckförmig vorhanden. An Eckbereichen 2 bis 5 sind Montagemittel in Form von Lochbohrungen ausgebildet. Die Lochbohrungen durchdringen eine Dicke der Adapterplatte 1, welche sich in Figur 1 in die Blattebene hinein erstreckt, vorteilhafterweise vollständig. Vorteilhafterweise bildet die Blattebene eine Hauptebene der Adapterplatte 1. Eine Außenseite 12 der Adapterplatte 1 erstreckt sich zum Beispiel in der Hauptebene. Z.B. bildet die Außenseite 12 der Adapterplatte 1 die Hauptebene.

In einem ersten und zweiten Eckbereich 2, 3 sind die Montagemittel in Form von Langlöchern 6 bis 8 bzw. 9 bis 11 ausgebildet. Vorteilhafterweise sind alle Montagemittel, insbesondere Lochbohrungen des ersten und zweiten Eckbereichs 2, 3 als ein Langloch 6 bis 11 ausgebildet. Vorteilhafterweise ist jeweils ein Langloch 6 bis 8 des ersten Eckbereichs 2 identisch zu einem weiteren, insbesondere einem einzigen weiteren Langloch 9 bis 11 des zweiten Eckbereichs 3 vorhanden. Eine Längserstreckung der Langlöcher 8 bis 11 des ersten und des zweiten Eckbereichs 2, 3 ist beispielsweise quer, insbesondere senkrecht zu einer Breitenerstreckung der Adapterplatte 1 ausgebildet. Vorteilhafterweise erstrecken sich alle Langlöcher des ersten und des zweiten Eckbereichs 2, 3 in ihrer Längserstreckung parallel zueinander.

Vorteilhafterweise wird die Adapterplatte 1 in Fahrtrichtung F an ein Fahrzeug oder ein Fahrzeugsitz (jeweils nicht gezeigt) montiert. Der erste und der zweite Eckbereich 2, 3 sind vorteilhafterweise in Bezug zu einer Spiegelebene, welche sich in Fahrtrichtung F erstreckt, spiegelsymmetrisch zueinander vorhanden. Bevorzugterweise sind der erste und der vierte Eckbereich 2, 5 in Bezug zu der Spiegelebene spiegelsymmetrisch zum zweite und dritten Eckbereich 3, 4 vorhanden. Vorteilhafterweise ist die Adapterplatte 1 in Bezug zu der Spiegelebene spiegelsymmetrisch ausgebildet.

Der dritte und der vierte Eckbereich 4, 5 umfassen vorteilhafterweise Montagemittel, insbesondere Lochbohrungen, welche zum einen als Langloch 13, 14, als eine Freiformbohrung 15, 16, sowie als eine insbesondere gewöhnliche, zylinderförmige Bohrung 17, 18 ausgebildet sind. Die Freiformbohrungen 15, 16 erstrecken sich vorteilhafterweise quer, insbesondere senkrecht zur Außenseite 12 der Adapterplatte 1 in eine Durchgangsrichtung durch die Adapterplatte 1. Die Freiformbohrungen 15, 16 umfassen vorteilhafterweise eine mäanderförmige Kontur, welche sich beispielsweise in einer Ebene der Außenseite 12 erstreckt. Die Freiformbohrungen 15, 16 sind beispielsweise in Bezug zu der Spiegelebene spiegelsymmetrisch an der Adapterplatte 1 ausgebildet, insbesondere angeordnet. Eine Längserstreckung der Langlöcher 13, 14 des dritten und vierten Eckbereichs 4, 5 ist beispielsweise quer, insbesondere senkrecht zu einer Breitenerstreckung der Adapterplatte 1 ausgebildet. Vorteilhafterweise erstrecken sich alle Langlöcher 6 bis 11, 13, 14 der vier Eckbereiche 2 bis 5 in ihrer Längserstreckung parallel zueinander.

Figuren 2 bis 5 zeigen eine Drehvorrichtung 19 umfassend einen Überbau 20, eine Dreheinheit 21 und einen Unterbau 22. An der Dreheinheit 19 ist weiterhin beispielsweise ein Steuerungshebel 23 anordenbar, mittels welchem eine Drehposition der Dreheinheit 21 und damit eine Position des Überbaus 20 relativ zum Unterbau 22 fixierbar ist.

Der Überbau 20 und der Unterbau 22 der Drehvorrichtung 19 sind vorteilhafterweise identisch ausgebildet. Beispielsweise umfasst sowohl der Überbau 20, als auch der Unterbau 22 die Montagemittelanordnung der Adapterplatte 1 der Figur 1. Beispielsweise ist die Adapterplatte 1 Teil des Überbaus 20 und/oder des Unterbaus 22. Im Folgenden werden entsprechend der vorangegangen genannten Variante die Bezugszeichen der Adapterplatte 1 identisch für die Drehvorrichtung 19 verwendet.

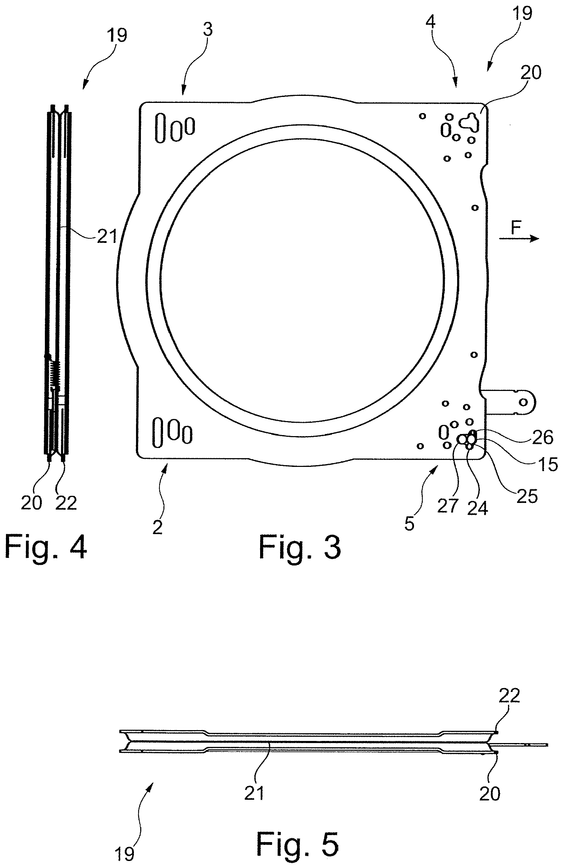

In Figur 3 schematisch im Eckbereich 5 dargestellt ist, wie die Freiformbohrung 15 vorteilhaft derart ausgebildet ist, dass an die Freiformbohrung 15 vier verschiedene Befestigungsmittel in Form von Befestigungsbolzen 24 bis 27 von insbesondere vier verschiedenen Befestigungsschematas anordenbar sind. Hierdurch ist die Drehvorrichtung 19 zur insbesondere flexible Montage an vier verschiedene Befestigungsschematas ausgebildet.

**Bezugszeichenliste**

| | | | |
|---|---|---|---|
| 1 | Adapterplatte | 15 | Freiformbohrung |
| 2 | Eckbereich | 16 | Freiformbohrung |
| 3 | Eckbereich | 17 | Bohrung |
| 4 | Eckbereich | 18 | Bohrung |
| 5 | Eckbereich | 19 | Drehvorrichtung |
| 6 | Langloch | 20 | Überbau |
| 7 | Langloch | 21 | Dreheinheit |
| 8 | Langloch | 22 | Unterbau |
| 9 | Langloch | 23 | Steuerungshebel |
| 10 | Langloch | 24 | Befestigungsbolzen |
| 11 | Langloch | 25 | Befestigungsbolzen |
| 12 | Außenseite | 26 | Befestigungsbolzen |
| 13 | Langloch | 27 | Befestigungsbolzen |
| 14 | Langloch | | |

## Patentansprüche

1. Adapterelement für eine Drehvorrichtung (19), wobei die Drehvorrichtung (19) dazu vorgesehen ist, einen Fahrzeugsitz mit einem Fahrzeug drehbeweglich zu verbinden, wobei das Adapterelement dazu ausgebildet ist, zwischen einer Dreheinheit (21) der Drehvorrichtung (19) und dem Fahrzeugsitz oder zwischen der Dreheinheit (21) der Drehvorrichtung (19) und dem Fahrzeug angeordnet zu werden, wobei das Adapterelement Montagemittel aufweist, wobei die Montagemittel zur Anbringung des Adapterelements an Befestigungsmittel des Fahrzeugsitzes und/oder an Befestigungsmittel (24 - 27) des Fahrzeugs ausgebildet sind, wobei die Befestigungsmittel (24 - 27) in einem definierten Befestigungsschema am Fahrzeugsitz oder am Fahrzeug vorhanden sind,
**dadurch gekennzeichnet, dass**
die Montagemittel derart ausgebildet sind, dass das Adapterelement an zwei verschiedene Befestigungsschemas eines oder mehrerer Fahrzeugsitze und/oder an zwei verschiedene Befestigungsschemas eines oder mehrerer Fahrzeuge anbringbar ist.

2. Adapterelement nach dem vorangegangenen Anspruch 1, **dadurch gekennzeichnet, dass** die Montagemittel spiegelsymmetrisch, insbesondere achsensymmetrisch ausgebildet sind.

3. Adapterelement nach einem der vorangegangenen Ansprüche, **dadurch gekennzeichnet, dass** die Montagemittel als Montageöffnungen vorhanden sind.

4. Adapterelement nach einem der vorangegangenen Ansprüche, **dadurch gekennzeichnet, dass** das Adapterelement in der Form einer Adapterplatte (1) ausgebildet ist, wobei die Montageöffnungen an separaten Bereichen (2 - 5) der Adapterplatte (1) ausgebildet sind, wobei die Montageöffnungen an einem ersten und an einem zweiten Bereich (2, 3) als Langlöcher (6 - 11) ausgebildet sind.

5. Adapterelement (1) nach dem vorangegangenen Anspruch 4, **dadurch gekennzeichnet, dass** ein Langloch (6) des ersten Bereichs (2) und ein Langloch (9) des zweiten Bereichs (3) in Längserstreckung des jeweiligen Langlochs (6, 9) gesehen sich in eine gleiche Richtung erstrecken.

6. Adapterelement (1) nach einem der vorangegangenen Ansprüche, **dadurch gekennzeichnet, dass** ein dritter und ein vierter Bereich (4, 5) vorhanden ist, und der dritte und der vierte Bereich (4, 5) eine Montageöffnung in Form eines Langlochs (13, 14) und eine Montageöffnung in Form einer Bohrung (17, 18) umfasst.

7. Adapterelement (1) nach einem der vorangegangenen Ansprüche, **dadurch gekennzeichnet, dass** der erste und der zweite Bereich (2, 3) im montierten Zustand am Fahrzeug und/oder am Fahrzeugsitz in Fahrtrichtung des Fahrzeugs gesehen hinten ausgebildet sind.

8. Drehvorrichtung (19) für einen Fahrzeugsitz, wobei die Drehvorrichtung (19) dazu ausgebildet ist, einen Fahrzeugsitz mit einem Fahrzeug drehbeweglich zu verbinden, **dadurch gekennzeichnet, dass** das Adapterelement (1) einen Überbau (20) der Drehvorrichtung (19) und/oder dass das Adapterelement (1) einen Unterbau (22) der Drehvorrichtung (19) bildet.

9. Drehvorrichtung (19) für einen Fahrzeugsitz, nach dem vorangegangenen Anspruch 8, **dadurch gekennzeichnet, dass** der Überbau (20) und der Unterbau (22) der Drehvorrichtung (19) identisch ausgebildet ist.

10. Fahrzeugsitz mit einem Adapterelement (1) und/oder einer Drehvorrichtung (19) nach einem der vorangegangenen Ansprüche.

11. Fahrzeug mit einem Adapterelement (1), einem Fahrzeugsitz und/oder einer Drehvorrichtung (19) nach einem der vorangegangenen Ansprüche.
